# EUROPEAN PATENT SPECIFICATION

(11) **EP 3 848 213 B1**
(45) Date of publication and mention of the grant of the patent: **01.05.2024**
(21) Application number: 20216268.1
(22) Date of filing: 22.12.2020
(51) Int. Cl.: B60H 1/34

(54) **AUTOMOBILE AIR CONDITIONER BLOWING ADJUSTING SHIFTING PIECE BUCKLE STRUCTURE**
BLASEINSTELLSCHALTSTÜCKSCHNALLENSTRUKTUR EINER KRAFTFAHRZEUGKLIMAANLAGE
STRUCTURE DE BOUCLE DE PIÈCE DE CHANGEMENT DE RÉGLAGE DE SOUFFLAGE DE CLIMATISEUR AUTOMOBILE

(30) Priority: 08.01.2020 CN 202020037704 U
(43) Date of publication of application: 14.07.2021
(73) Proprietor: Wang, Shunqing, Xiangtan, Hunan 411100 (CN)
(72) Inventor: Wang, Shunqing, Xiangtan, Hunan 411100 (CN)
(74) Representative: Cleanthous, Marinos

(56) References cited:
- WO-A1-2017/191764
- DE-A1-102018 126 016
- US-A1- 2019 047 375

## Description

### TECHNICAL FIELD

The present invention relates to an automobile air conditioner blowing adjusting shifting piece buckle structure.

### BACKGROUD

Currently, most automobile air conditioner air outlets are provided with toggle assemblies for controlling or adjusting the air direction, the toggle assemblies are important functional assemblies of the air outlets and are also appearance parts, and the performance and the appearance of the toggle assemblies directly affect evaluation of clients on the air outlets and interior trims.

A wind direction adjusting shifting piece located at the air outlet of an air conditioner can become brittle and easy to break due to long-term alternate erosion of cold air and hot air, so that the shifting piece needs to be replaced frequently.

Most of existing shifting pieces are shifting piece bodies, fan blades at an air outlet of the air conditioner are fixed in a shifting piece body cavity through the shifting piece body, a fixing piece matched with the shifting piece body cavity is arranged below the shifting fork piece, the upper portion of the shifting piece body cavity is fixed and connected with the shifting fork piece , and the installation combination mode is complex, so that the operation is difficult and the shifting piece is inconvenient to replace when the shifting piece is dismount and mount.

DE 10 2018126016 discloses a coupling arrangement with an air guiding element and an operating device, the operating device having a fork with two opposite fork arms and the air guiding element having a coupling section with a recess, one axis in the recess running orthogonally to the fork arms and the axis has one ball which is guided between the fork arms.

WO 2017/191764 discloses an operation knob for an air conditioning register of a vehicle, wherein a horizontal insertion hole into which a front fin is inserted is formed in the operation knob, an open recess for fitting an engaging leg is formed on the back part of the operation knob and bearing holes, which each hold a shaft protruding from either side of the front part of the engaging leg, are provided on both sides of the open recess.

US 2019/047375 discloses an automobile air conditioner blowing adjusting shifting piece buckle structure comprising a shifting piece body, wherein the shifting piece body comprises an upper shell and a lower shell, the upper shell extends downwards to form a connecting piece , the connecting piece is provided with convex lugs, and shaft holes are formed in the convex lugs, the shaft holes are connected with a shaft pin of a shifting fork, positioning grooves are formed in the peripheries of the shaft holes, the upper shell and the lower shell are of an integrally-formed, an open groove cavity is formed in the upper shell, an opening is formed in the top of the upper shell, automobile air conditioner blades are clamped into the open groove cavity in the upper shell from the opening in the top of the upper shell, and the automobile air conditioner blades are fixed into the open groove cavity through clamping parts arranged on the upper shell and the lower shell.

### SUMMARY

To overcome the technical defects, the present invention provides an automobile air conditioner blowing adjusting shifting piece buckle structure as set out in independent claim 1. Preferred embodiments of the present invention are laid down in the appended dependent claims.

Preferably, the shifting fork comprises a shifting fork piece, the shaft pin and the positioning pieces; the shifting fork piece, the shaft pin and the positioning pieces are integrally formed and designed; the positioning pieces are located above the shaft pin, and two positioning pieces are arranged at the left end and the right end of the shaft pin respectively.

Preferably, the number or the positions of the positioning pieces correspond to that or those of the positioning grooves.

Preferably, the clamping parts are arranged at one end of the upper shell and one end of the lower shell or the two ends of the upper shell and the two ends of the lower shell respectively; each clamping part is provided with steps, and one or more steps correspond to the shapes of the automobile air conditioner blades respectively.

Preferably, the convex lugs are vertically arranged or obliquely arranged inwards.

Preferably, decoration strips are arranged at the bottom of the shifting piece body; and the decoration strips are clamped into the shifting piece body through clamping blocks.

Preferably, antiskid parts or concave operative surfaces are arranged on the surface of the upper shell and the surface of the lower shell.

The automobile air conditioner blowing adjusting shifting piece buckle structure has the advantages that firstly, according to the automobile air conditioner blowing adjusting shifting piece buckle structure provided by the present invention, the upper shell and the lower shell are of an integrally-formed structure , the automobile air conditioner blades are clamped into the open type groove cavity from the opening and fixed into the open type groove cavity through the clamping parts, the structure is simpler, an existing shifting piece body for fixing the automobile air conditioner blades to the shifting piece body through fixing pieces is omitted, and the structure is convenient to mount and dismount; and secondly, due to the design of the positioning grooves and the positioning pieces, the rotating range of the shifting fork is limited in the shifting piece body, and the rotating angle is not too large when the shifting fork is shifted.

### BRIEF DESCRIPTION OF THE DRAWINGS

In order to illustrate the technical solutions in the embodiments of the present invention or in the prior art more clearly, the accompanying diagrams needing to be used in the embodiments or in the description in the prior art are simply described. Apparently, the embodiments in the following description are merely a part rather than all of the embodiments of the present invention.
FIG. 1 is a diagram of an integral structure of the present invention.
FIG.2 is an exploded view of an integral structure of the present invention.

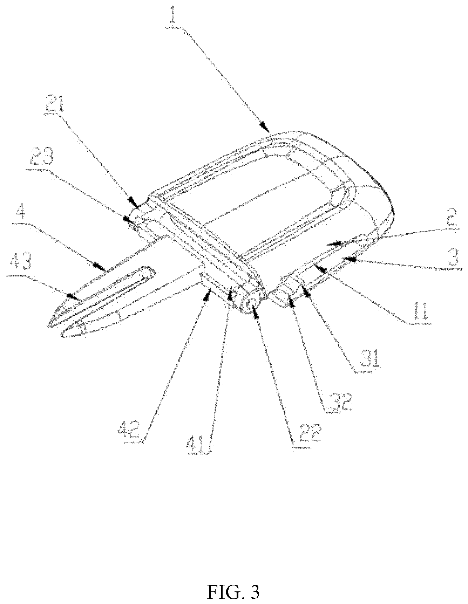

FIG. 3 is a diagram of an integral structure in another embodiment of the present invention.

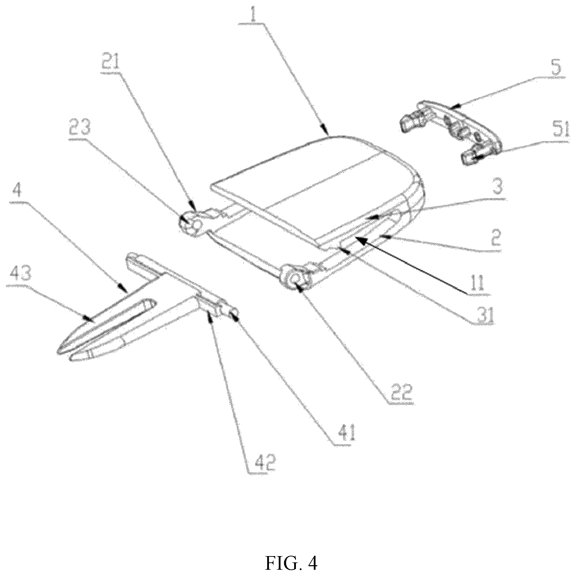

FIG.4 is an exploded view of an integral structure in another embodiment of the present invention.

In the figures, 1, shifting piece body; 11, open groove cavity; 2, upper shell; 21, convex lug; 22, shaft hole; 23, positioning groove; 3, lower shell; 31, clamping part; 32, step; 4, shifting fork; 41, shaft pin; 42, positioning piece; 43, shifting fork; 5, decoration strip; and 51, clamping block.

### DESCRIPTION OF THE EMBODIMENTS

To make a person skilled in the art understand the technical solutions in this invention better, the following clearly and completely describes the technical solutions in the embodiments of this invention with reference to the accompanying drawings in the embodiments of this invention. [0019] In the description of the present invention, the indicative direction or position relations of the terms such as "upper" "lower" , "left", "right" , "front", "back", "top", "bottom", "inner", ""outer", "middle", "vertica", "horizontal", ""transverse"and"long itudinal"are direction or position relations illustrated based on the accompanying diagrams. The terms are mainly used for facilitating the description of embodiments of the present invention, but not for indicating or hinting that the indicated device or element must be in a specific direction and is constructed and operated in the specific direction.

Also, besides direction or position relations, some of the terms above may be used to refer to other meanings, for example, the term "on" may also be used to refer to some kind of dependency or connection relationship in some cases. For any person skilled in the art, the specific meanings of the terms in the present invention can be understood according to specific conditions.

Moreover, the terms "installed", "arranged", "provided", "connected" and "sleeve joint" should be understood broadly. For example, the connection may be fixed connection, detachable connection or integral construction; the connection may be mechanical connection or electrical connection; the connection may be direct connection, or indirect connection through an intermediate, or internal communication between two devices, elements or components. For any person skilled in the art, the specific meanings of the terms in the present invention can be understood according to specific conditions.

lt needs to be illustrated that under the compatible condition, the embodiments in this invention and characteristics in the embodiments can be combined mutually to the extent of the present invention, which is defined by the appending claims.. This invention will be described in detail below with reference to the accompanying drawings in conjunction with the embodiments.

### Embodiment I

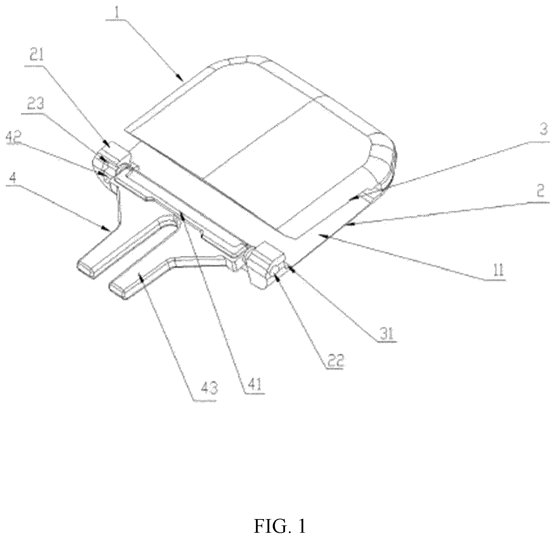

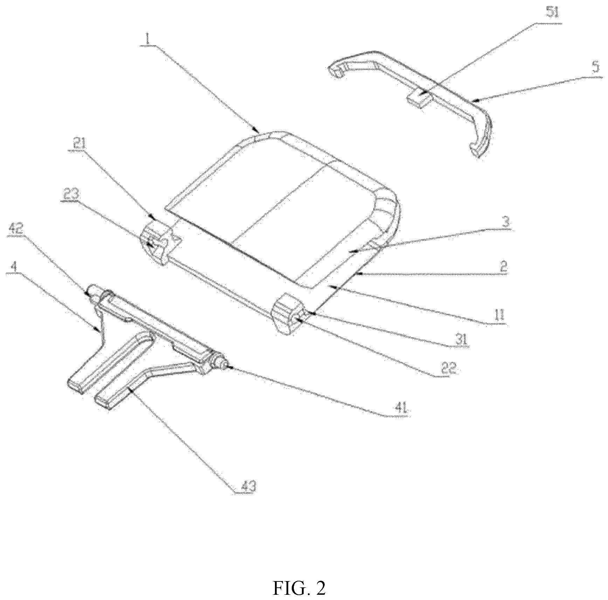

Referring to FIG.1 to FIG. 2, an automobile air conditioner blowing adjusting shifting piece buckle structure comprising a shifting piece body 1, the shifting piece body 1 comprises an upper shell 2 and a lower shell 3; the upper shell 2 extends downwards to form a connecting piece; the connecting piece is provided with convex lugs 21, shaft holes 22 are formed in the convex lugs 21, and the convex lugs 21 are vertically arranged or obliquely arranged inwards; the shaft holes 22 are connected with a shaft pin 41 of a shifting fork 4, and the shaft pin 41 rotates in the shaft holes22; positioning grooves 23 are formed in the peripheries of the shaft holes 22, and the shaft pin 41 is provided with positioning pieces 42; the positioning pieces 42 are arranged in the positioning grooves 23 and are used for positioning rotation of the shifting fork 4, and the shifting fork 4 is prevented from being in opposite direction by too large rotating angle due to the action of external force; the radian of the positioning groove at one end of each of the convex lugs 21 is set to be 40-85degrees; and the radians of the positioning grooves 23 formed in the two ends of the convex lugs 21 are set to be 40-180 degrees.

The upper shell 2 and the lower shell 3 are of an integrally-formed structure, an open groove cavity 11 is formed in the upper shell, an opening is formed in the top of the upper shell, automobile air conditioner blades are clamped into the open groove cavity 11 in the upper shell from the opening in the top of the upper shell, and the automobile air conditioner blades are fixed into the open groove cavity 11 through clamping parts 31 arranged on the upper shell 2 and the lower shell 3; the clamping parts 31 are arranged at one end of the upper shell 2 and one end of the lower shell3 or the two ends of the upper shell 2 and the two ends of the lower shell 3respectively; the clamping parts 31 can be arranged at one end of the upper shell 2and one end of the lower shell 3, and also can be arranged at the two ends of the upper shell 2 or at the two ends of the lower shell 3; each clamping part 31 is provided with steps 32, and the steps 32 play a role of buttering connection in order to facilitate the automobile air conditioner blades to fall into the open groove cavity11; and one or more steps 32 correspond to the shapes of the automobile air conditioner blades respectively.

The shifting fork 4 comprises a shifting fork piece 43, a shaft pin 41 and positioning pieces 42; the shifting fork piece 43, the shaft pin 31 and the positioning pieces 42 are integrally formed and designed; the positioning pieces 42 are located above the shaft pin 41, and two positioning pieces 42 are arranged at the left end and the right end of the shaft pin 41 respectively.

Decoration strips 5 are arranged at the bottom of the shifting piece body 1; the decoration strips 5 are clamped into the shifting piece body 1 through clamping block51, and one or more decoration strips 51 are arranged; and the decoration strips 5are different according to positions and shapes designed by different vehicle models, and can be mounted or dismounted according to personal preference.

The shifting fork piece 43 is different according to positions and shapes designed by different vehicle models, and the shape, the position, the size and the like of the shifting fork piece 43 can be designed according to different vehicle models and are not restricted factors.

Antiskid parts or concave operative surfaces are arranged on the surface of the upper shell 2 and the surface of the lower shell 3, and friction is generated so that the shifting piece body 1 is convenient to a user to control.

### Embodiment II

The connecting piece is located at one end of the upper shell 2; and the convex lugs 21 are arranged at the two ends of the connecting piece, shaft holes 22 are formed in the convex lugs 21, positioning grooves 23 are formed in the peripheries of one ends or the two ends of the convex lugs 21, the angles of the positioning grooves 23 in one end of each of the convex lugs 21 are different from those of the positioning grooves 23 in the two ends of the convex lugs 21, and the positioning grooves 23 are arc-shaped grooves.

### Embodiment III

According to the working principle, the shifting piece body 1 is clamped into the automobile air conditioner blades through the opening, so that the automobile air conditioner blades are placed in the open type groove cavity 11, and the shifting fork piece 43 clamps the blades in an air conditioner; when force in the horizontal direction is exerted on the shifting fork body 1, friction is generated by the anti-skid parts or concave operative surfaces, the shifting piece body 1 slides on the automobile air conditioner blades, the shifting fork piece 43 clamps the blades in the air conditioner to horizontally adjust the direction of an air outlet, and therefore the air outlet direction of the air conditioner is adjusted; and force in the vertical direction is exerted on the shifting fork body 1, friction is generated by the anti-skid parts or concave operative surfaces, the air outlet direction of the automobile air conditioner blades is vertically adjusted, and therefore the air outlet direction of the air conditioner is adjusted, and finally the decoration strips are installed or not according to personal preference.

According to the automobile air conditioner blowing adjusting shifting piece buckle structure provided by the present invention, the upper shell and the lower shell are of an integrally-formed structure, the automobile air conditioner blades are clamped into the open type groove cavity from the opening and fixed into the open type groove cavity through the clamping parts, the structure is simpler, an existing shifting piece body for fixing the automobile air conditioner blades to the shifting piece body through fixing pieces is omitted, and the structure is convenient to mount and dismount; and secondly, due to the design of the positioning grooves and the positioning pieces, the rotating range of the shifting fork is limited in the shifting piece body, and the rotating angle is not too large when the shifting fork is shifted.

The above embodiments should not be taken as limiting the scope of the present invention, which is defined by the appending claims.

## Claims

1. An automobile air conditioner blowing adjusting shifting piece buckle structure comprising a shifting piece body (1), the shifting piece body (1) comprises an upper shell (2) and a lower shell (3); the upper shell (2) extends downwards to form a connecting piece; the connecting piece is provided with convex lugs (21), and shaft holes (22) are formed in the convex lugs (21); the shaft holes (22) are connected with a shaft pin (41) of a shifting fork (4) so that the shaft pin (41) is adapted to rotate in the shaft holes (22);
positioning grooves (23) are formed in the peripheries of the shaft holes (22); and
the upper shell (2) and the lower shell (3) are of an integrally-formed structure, an open groove cavity (11) is formed in the upper shell (2), an opening is formed in the top of the upper shell (2), automobile air conditioner blades are clamped into the open groove cavity (11) in the upper shell (2) from the opening in the top of the upper shell (2), and the automobile air conditioner blades are fixed into the open groove cavity (11) through clamping parts (31) arranged on the upper shell (2) and the lower shell (3);
the automobile air conditioner blowing adjusting shifting piece buckle structure is **characterized in that**: the shaft pin (41) is provided with positioning pieces (42) and the positioning pieces (42) are arranged in the positioning grooves (23) so that the rotating range of the shifting fork (4) is limited in the shifting piece body (1).

2. The automobile air conditioner blowing adjusting shifting piece buckle structure according to claim 1, **characterized in that** the shifting fork (4) comprises a shifting fork piece (43), the shaft pin (41) and the positioning pieces (42); the shifting fork piece (43), the shaft pin (41) and the positioning pieces (42) are integrally formed and designed; the positioning pieces (42) are located above the shaft pin (41), and two positioning pieces (42) are arranged at the left end and the right end of the shaft pin(41) respectively.

3. The automobile air conditioner blowing adjusting shifting piece buckle structure according to claim 2, **characterized in that** the number or the positions of the positioning pieces (42) correspond to that or those of the positioning grooves (23).

4. The automobile air conditioner blowing adjusting shifting piece buckle structure according to claim 1, **characterized in that** the clamping parts (31) are arranged at one end of the upper shell (2) and one end of the lower shell (3) or the two ends of the upper shell (2) and the two ends of the lower shell (3) respectively; each clamping part (31) is provided with steps (32), and one or more steps (32) correspond to the shapes of the automobile air conditioner blades respectively.

5. The automobile air conditioner blowing adjusting shifting piece buckle structure according to claim 1, **characterized in that** the convex lugs (21) are vertically arranged or obliquely arranged inwards.

6. The automobile air conditioner blowing adjusting shifting piece buckle structure according to claim 1, **characterized in that** decoration strips (5) are arranged at the bottom of the shifting piece body (1); and the decoration strips (5) are clamped into the shifting piece body (1) through clamping blocks (51).

7. The automobile air conditioner blowing adjusting shifting piece buckle structure according to claim 1, **characterized in that** antiskid parts or concave operative surfaces are arranged on the surface of the upper shell (2) and the surface of the lower shell (3).

## Patentansprüche

1. beweglicher Schnallenstruktur von Windeinstellschaltstück einer Kraftfahrzeugklimaanlage, umfassend einen Schaltstückkörper (1), wobei der Schaltstückkörper (1) eine obere Schale (2) und eine untere Schale (3) aufweist; wobei sich die obere Schale (2) nach unten erstreckt, um ein Verbindungsstück zu bilden; wobei das Verbindungsstück mit konvexen Nasen (21) versehen ist und Wellenlöcher (22) in den konvexen Nasen (21) ausgebildet sind; wobei die Wellenlöcher (22) mit einem Wellenstift (41) einer Schaltgabel (4) verbunden sind, so dass der Wellenstift (41) in den Wellenlöchern (22) drehbar ist;
wobei Positionierungsnuten (23) in den Umfängen der Wellenlöcher (22) ausgebildet sind und
wobei die obere Schale (2) und die untere Schale (3) eine einstückig geformte Struktur haben, wobei ein offener Rillenhohlraum (11) in der oberen Schale (2) gebildet ist und eine Öffnung in der Oberseite der oberen Schale (2) gebildet ist, wobei die Flügel der Kraftfahrzeugklimaanlage von der Öffnung in der Oberseite der oberen Schale aus in den offenen Rillenhohlraum (11) in der oberen Schale (2) eingeklemmt werden, und
wobei die Flügel der Kraftfahrzeugklimaanlage in den offenen Rillenhohlraum (11) durch Klemmteile (31), die an der oberen Schale (2) und der unteren Schale angeordnet sind, befestigt werden;
die beweglicher Schnallenstruktur von Windeinstellschaltstück einer Kraftfahrzeugklimaanlage, **dadurch gekennzeichnet, dass** der Wellenstift (41) mit Positionierungsstücken (42) versehen ist und die Positionierungsstücke (42) in den Positionierungsnuten (23) angeordnet sind, so dass der Drehbereich der Schaltgabel (4) in dem Schaltstückkörper (1) begrenzt ist.

2. beweglicher Schnallenstruktur von Windeinstellschaltstück einer Kraftfahrzeugklimaanlage nach Anspruch 1, **dadurch gekennzeichnet, dass** die Schaltgabel (4) ein Schaltgabelstück (43), den Wellenzapfen (41) und die Positionierungsstücke (42) umfasst; wobei das Schaltgabelstück (43), der Wellenzapfen (41) und die Positionierungsstücke (42) einstückig ausgebildet und gestaltet sind; wobei die Positionierungsstücke (42) oberhalb des Wellenzapfens (41) angeordnet sind und zwei Positionierungsstücke (42) jeweils am linken und rechten Ende des Wellenzapfens (41) angeordnet sind.

3. beweglicher Schnallenstruktur von Windeinstellschaltstück einer Kraftfahrzeugklimaanlage nach Anspruch 2, **dadurch gekennzeichnet, dass** die Anzahl oder die Positionen der Positionierungsstücke (42) der Anzahl oder der Positionen der Positionierungsnuten (23) entsprechen.

4. beweglicher Schnallenstruktur von Windeinstellschaltstück einer Kraftfahrzeugklimaanlage nach Anspruch 1, **dadurch gekennzeichnet, dass** die Klemmteile (31) an einem Ende der oberen Schale (2) und einem Ende der unteren Schale (3) bzw. den beiden Enden der oberen Schale (2) und den beiden Enden der unteren Schale (3) angeordnet sind; wobei jedes Klemmteil (31) mit Stufen (32) versehen ist und eine oder mehrere Stufen (32) jeweils den Formen der Flügel der Kraftfahrzeugklimaanlage entsprechen.

5. beweglicher Schnallenstruktur von Windeinstellschaltstück einer Kraftfahrzeugklimaanlage nach Anspruch 1, **dadurch gekennzeichnet, dass** die konvexen Nasen (21) senkrecht oder schräg nach innen angeordnet sind.

6. beweglicher Schnallenstruktur von Windeinstellschaltstück einer Kraftfahrzeugklimaanlage nach Anspruch 1, **dadurch gekennzeichnet, dass** an der Unterseite des Schaltstückkörpers (1) Zierstreifen (5) angeordnet sind, wobei die Zierleisten (5) über Klemmblöcke (51) im Schaltstückkörper (1) festgeklemmt werden.

7. beweglicher Schnallenstruktur von Windeinstellschaltstück einer Kraftfahrzeugklimaanlage nach Anspruch 1, **dadurch gekennzeichnet, dass** auf der Oberfläche der Oberschale (2) und der Oberfläche der Unterschale (3) rutschhemmende Teile oder konkave Wirkflächen angeordnet sind.

## Revendications

1. Structure de boucle pour une pièce de variation d'ajustement de soufflage de climatiseur automobile, comprenant un corps de pièce de variatio3, dans laquelle le corps de pièce de variation (1) comprend une coque supérieure (2) et une coque inférieure (3) ; la coque supérieure (2) s'étend vers le bas pour former une pièce de liaison ; la pièce de liaison est munie de cosses convexes (21), et des trous d'arbre (22) sont formés dans les cosses convexes (21) ; les trous d'arbre (22) sont reliés à une broche d'arbre (41) d'une fourche de variation (4) de sorte que la broche d'arbre (41) soit adapté pour tourner dans les trous d'arbre (22) ;
des rainures de positionnement (23) sont formées à la périphérie des trous d'arbre (22) ;
et la coque supérieure (2) et la coque inférieure (3) présentent une structure intégralement formée, une cavité à rainure ouverte (11) est formée dans la coque supérieure (2), une ouverture est formée à la partie supérieure de la coque supérieure (2), des lames du climatiseur automobile sont serrées dans la cavité à rainure ouverte (11) dans la coque supérieure (2) à partir de l'ouverture dans la partie supérieure de la coque supérieure (2), et les lames du climatiseur automobile sont fixées dans la cavité à rainure ouverte (11) par l'intermédiaire des pièces de serrage (31) disposées sur la coque supérieure (2) et la coque inférieure (3) ;
la structure de boucle pour la pièce de variation d'ajustement de soufflage de climatiseur automobile est **caractérisée en ce que** : la broche d'arbre (41) est munie de pièces de positionnement (42) et les pièces de positionnement (42) sont disposées dans les rainures de positionnement (23) de sorte qu'une plage de rotation de la fourche de variation (4) soit limitée dans le corps de pièce de variation (1).

2. Structure de boucle pour une pièce de variation d'ajustement de soufflage de climatiseur automobile selon la revendication 1, **caractérisée en ce que** la fourche de variation (4) comprend une pièce de fourche de variation (43), la broche d'arbre (41) et les pièces de positionnement (42) ; la pièce de fourche de variation (43), la broche d'arbre (41) et les pièces de positionnement (42) sont intégralement formées et conçues ; les pièces de positionnement (42) sont situées au-dessus de la broche d'arbre (41), et deux pièces de positionnement (42) sont disposées respectivement à l'extrémité gauche et à l'extrémité droite de la broche d'arbre (41).

3. Structure de boucle pour une pièce de variation d'ajustement de soufflage de climatiseur automobile selon la revendication 2, **caractérisée en ce que** le nombre ou les positions des pièces de positionnement (42) correspond (correspondent) à celui ou à celles des rainures de positionnement (23).

4. Structure de boucle pour une pièce de variation d'ajustement de soufflage de climatiseur automobile selon la revendication 1, **caractérisée en ce que** les pièces de serrage (31) sont disposées à une extrémité de la coque supérieure (2) et à une extrémité de la coque inférieure (3) ou aux deux extrémités de la coque supérieure (2) et aux deux extrémités de la coque inférieure (3) respectivement ; chaque pièce de serrage (31) est munie de paliers (32), et une ou plusieurs paliers (32) correspondent respectivement aux formes des lames du climatiseur automobile.

5. Structure de boucle pour une pièce de variation d'ajustement de soufflage de climatiseur automobile selon la revendication 1, **caractérisée en ce que** les cosses convexes (21) sont disposées verticalement ou obliquement vers l'intérieur.

6. Structure de boucle pour une pièce de variation d'ajustement de soufflage de climatiseur automobile selon la revendication 1, **caractérisée en ce que** des bandes décoratives (5) sont disposées à la partie inférieure du corps de pièce de variation (1) ; et les bandes décoratives (5) sont serrées dans le corps de pièce de variation (1) à l'aide de blocs de serrage (51).

7. Structure de boucle pour une pièce de variation d'ajustement de soufflage de climatiseur automobile selon la revendication 1, **caractérisée en ce que** des pièces antidérapantes ou des surfaces d'opération concaves sont disposées sur la surface de la coque supérieure (2) et sur la surface de la coque inférieure (3).
